# EUROPEAN PATENT SPECIFICATION

(11) **EP 3 613 259 B1**
(45) Date of publication and mention of the grant of the patent: **12.04.2023**
(21) Application number: 18788174.3
(22) Date of filing: 20.04.2018
(51) Int. Cl.: H05B 6/14, H05B 6/02, H05B 6/10, B29C 65/46, E04D 15/04, H05B 6/06

(54) **HAND-HELD INDUCTION BONDING TOOL**
HANDWERKZEUG FÜR INDUKTIONSBONDEN
OUTIL DE SOUDAGE À INDUCTION PORTATIF

(30) Priority: 20.04.2017 US 201762487887 P
(43) Date of publication of application: 26.02.2020
(73) Proprietor: OMG, Inc., Agawam, MA 01001 (US)
(72) Inventor: KELLY, Joshua, S., Longmeadow, MA 01106 (US); SAMIAPPAN, Tamilselvan, St Johns, FL 32259 (US); PACHOLOK, David, R., Sleepy Hollow, IL 60118 (US)
(74) Representative: Glawe, Delfs, Moll
(86) International application number: PCT/US2018/028494
(87) International publication number: WO 2018/195381

(56) References cited:
- WO-A1-2006/104740
- WO-A2-01/33909
- US-A- 4 151 387
- US-A- 5 919 387
- US-A1- 2003 075 540
- US-A1- 2007 023 422
- US-A1- 2009 321 423
- US-A1- 2015 144 617
- US-B1- 7 491 916
- US-B2- 8 492 683

## Description

### BACKGROUND

The present disclosure relates to tools for inductively heating metal objects and specifically relates to a hand-held tool for inductively heating adhesive-coated plates that secure a roofing membrane to a roof structure.

Portable induction heating tools which are employed to seal roofing anchor plates having a heat-activated adhesive to an overlying roofing membrane are well known. Because the anchor plates are typically disposed below a membrane and are hidden, it can be challenging to clearly identify the position of the anchor plate and to properly position the tool over the anchor plate. The anchor plate may produce a slightly raised area or protuberance beneath the membrane, which may serve as a guide for positioning of the tool.

Some roofing installations include a thin sheet of metal foil on one face of the rigid foam insulation typically arranged beneath the membrane. To reliably heat the anchor plates, it is necessary to accurately couple the powerful magnetic field generated by the induction heating tool to the anchor plate while minimizing the magnetic energy dispersed into the surrounding foil. Therefore, it is important that the induction heating tool generate a magnetic field closely matched to the shape of the anchor plate and to align the induction coil over the anchor plate during each induction heating cycle. Accordingly, it is highly desirable to provide an induction heating tool that can be operated to accurately and consistently heat the metal anchor plate without losing energy to the surrounding foil.

A common configuration for an induction bonding tool allows the user to stand upright while inductively heating each bonding plate. This saves the operator from kneeling or getting up and down from a bent-over position. Most locations on a membrane roof are unobstructed, making use of a so-called "stand-up" inductive heating tool. However, some locations on a membrane roof project may be cramped and relatively inaccessible, making the use of a large bulky tool impossible. Examples include areas on the upright portion of a parapet wall at the edge of a roof, or areas around and beneath roof mounted equipment such as HVAC systems. Document WO 2006/104740 A1 describes an induction heating apparatus for attaching membrane roofs. A top membrane layer is attached to attachment disks that hold sheets of thermal insulation to the top of roof substrates. The heating apparatus emits a magnetic field that raises the temperature of the disks and a heat-activated adhesive on top of the disks which, after cooling, becomes adhered to the bottom surface of the top membrane layer. The apparatus includes a set of bottom guides that allow a user to find the attachment disks mechanically, without actually seeing those disks beneath the top membrane layer. A fine locator circuit is provided, using a magnetic field. Document WO 01/33909 A2 describes an apparatus for using magnetic fields to heat magnetically susceptible materials to bond materials to one another. The system makes use of the effect that alternating magnetic fields induce eddy currents and generate heat within susceptors, and the effect that alternating magnetic fields additionally induce magnetic hysteresis that occurs in magnetic materials and thereby generate heat. An induction heating tool is used to emit the magnetic field at its work coil, and an electronic controller measures the energy being used by a power converter that generates the alternating current driving the work coil which creates the magnetic field. The distance between the susceptor and work coil is repeatedly analyzed based upon the power converter's input energy, and the work coil is driven at a repeatedly corrected power level during the heating. Once a sufficient accumulated energy has been delivered to the susceptor, the magnetic field is turned off automatically by the tool,

### SUMMARY OF THE INVENTION

The invention is defined by a portable induction heating tool with the features of claim 1 and a method according to claim 7. The portable induction heating tool comprises a housing including a base having a support surface, said support surface defining a recess facing away from said housing, said recess at least partially defined by a wall projecting from said support surface; a work coil within said housing and secured to said base in a location aligned with said recess; electronic circuitry configured to provide oscillating electrical energy to said work coil, thereby generating an oscillating magnetic field projecting away from said base, wherein said electronic circuitry also configured to detect a quantity of energy consumed by said work coil and to limit said quantity of energy to a predetermined quantity, wherein said base has a front end and a rear end, said wall defines a rear limit of said recess, said rear limit of said recess located between said front end and said rear end, said recess being open toward the front end of said base. The disclosed hand-held induction heating tool is a compact, self-contained and ergonomic tool for inductively heating adhesive coated bonding plates in a membrane roofing system. The disclosed hand-held induction heating tool includes a control circuit that employs several variables to define a quantity of energy to be delivered to a bonding plate. The variables include ambient temperature, power consumed at the work coil and the setting of a manual adjustment.

The tool may include a temperature sensor configured to detect the ambient temperature of the roofing membrane and bonding plate. The ambient temperature is provided to the electrical circuit generating the high frequency magnetic field that inductively heats the bonding plate. The ambient temperature serves to increase (when the roof is cold) or decrease (when the roof is hot) the amount of energy delivered to the plate. The temperature sensor is secured to the base of the hand-held tool, close to the membrane when the tool is in use, but spaced apart from the work coil. The temperature sensor is continuously connected to the drive circuit and provides an input that varies with the temperature of the roofing membrane.

The disclosed hand-held induction bonding tool may also include a manual adjustment for increasing or decreasing energy delivered by the tool. The manual adjustment is in the form of a rotary knob having a center position representing a neutral energy adjustment, where the energy delivered to the plate is determined by the drive circuit. Rotating the knob counter clockwise reduces the energy generated by the drive circuit, while rotating the knob clockwise increases the energy generated by the drive circuit. The manual adjustment reduces or increases the energy delivered by a pre-determined amount, for example the predetermined amount is about +/- 20%, or about +/-15%. This adjustment can be used to compensate for conditions present in a particular project, such as moisture present between the membrane and the bonding plate, e.g., beneath the membrane.

The disclosed hand-held induction bonding tool may include visual and/or vibratory (haptic) feedback to the operator. The visual feedback may take the form of colored LEDs visible to the operator of the hand-held tool. One form of LED visual feedback may take the form of green and red lights visible from either side of the tool (for left or right hand operation). Green lights indicate the tool is powered on and ready to initiate a bonding cycle, while red lights indicate a bonding cycle has been initiated. The LED lights are selected to be of high brightness, for visibility in full daylight and are provided with lenses that spread the light, making the light visible from a range of angles.

The vibratory feedback may be provided by a motor-driven vibrator located in the handle of the tool and arranged to be felt by the operator of the tool. The vibrator may be configured to produce vibrations during an induction heating cycle, so the operator has a clear tactile indication that the tool is heating a plate and should not be moved until vibration stops, indicating the induction heating cycle has been completed. The vibratory feedback is useful in environments where the visual indication may not be in the operator's field of view and is easily discerned in environments with high ambient noise levels.

The disclosed hand-held induction bonding tool may have a base configured to aid the operator in centering the induction coil of the tool over each bonding plate. The bonding plates are circular and have a raised, annular upper surface coated with heat activated adhesive. The depressed center of the plate includes a hole for a fastener that connects the plate and intervening rigid insulation to the roof deck structure. The head of the fastener is below the upper surface of the plate and does not come into contact with the roof membrane. The roofing membrane rests on each plate, resulting in a raised "bump" beneath the membrane.

According to aspects of the disclosure, the base of the hand-held tool defines a U-shaped depression open to the forward end of the tool. This depression assists the operator of the tool with accurately positioning the tool's induction coil over the bonding plate before initiating an induction heating cycle. The opening at the front of the base receives the raised portion of the membrane where it passes over the bonding plate, the sides of the depression guide movement of the tool to a position where the plate is positioned beneath the induction coil. The sides and curved rear part of the depression provide tactile feedback to the operator, who can feel the plate and raised part of the membrane move into position against the curved rear end of the depression.

An analog control circuit is disclosed in conjunction with the hand-held induction-heating tool. The analog control circuit employs comparators and analog logic to control actuation and operation of the circuit that generates the high frequency magnetic field in the induction coil. The disclosed hand-held induction heating tool includes a temperature sensor in the base of the tool that generates a temperature signal that fluctuates with the ambient temperature of the roof membrane. The hand-held induction heating tool includes a manual adjustment for increasing or decreasing the energy applied to a plate, with the setting of the manual adjustment providing an energy adjustment signal. The disclosed hand-held induction heating tool senses energy consumed at the induction heating coil and generates a power consumed signal. The analog control circuit is configured to employ the temperature signal, temperature adjustment signal, and energy consumed signal to control the length of time that the work coil is energized by the power inverter. According to aspects of the disclosure, the energy consumed signal is present only when the work coil is substantially aligned with a plate. The value of the energy consumed signal must have a pre-determined magnitude, or the heating cycle is terminated. This prevents a heating cycle from being applied when there is no plate present or the work coil is not substantially aligned with the plate.

### BRIEF DESCRIPTION OF THE DRAWINGS

Figure 1 is an exploded perspective view of an exemplary embodiment of a hand-held induction bonding tool according to aspects of the disclosure;
Figure 2 is a perspective view of the hand-held induction bonding tool of Figure 1 in a fully assembled condition;
Figure 3 is a side view of the hand-held induction bonding tool of Figures 1 and 2;
Figure 4 is a bottom, perspective view of the base of the hand-held induction bonding tool of Figures 1-3;
Figure 5 is a side view of the base of Figure 4, with the bottom surface of the base facing in a downward direction;
Figure 6 is a bottom perspective view of the base of Figures 4 and 5;
Figure 7 is a functional block diagram of one embodiment of the hand-held induction bonding tool, according to aspects of the disclosure; and
Figure 8 is a partial, simplified, schematic of a joule controller according to aspects of the present disclosure.

### DETAILED DESCRIPTION

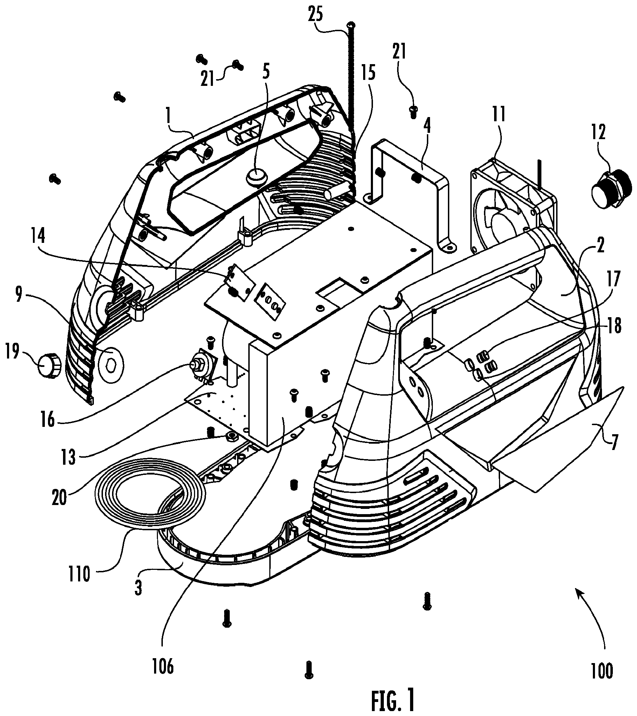

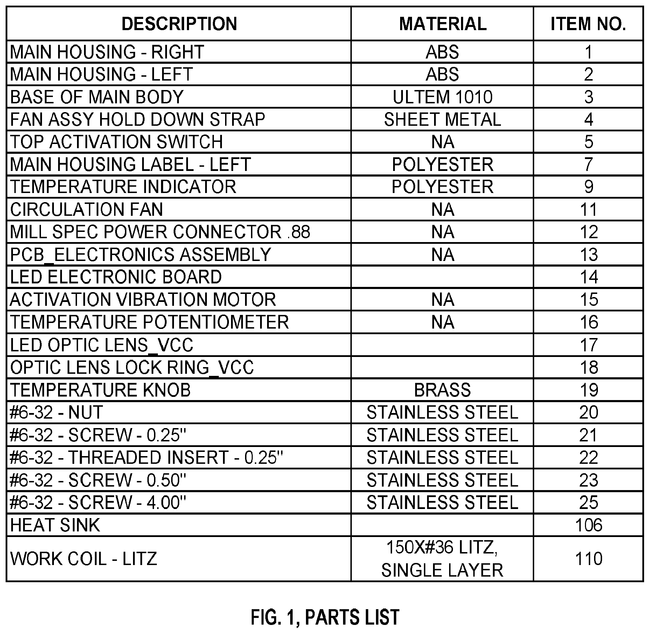

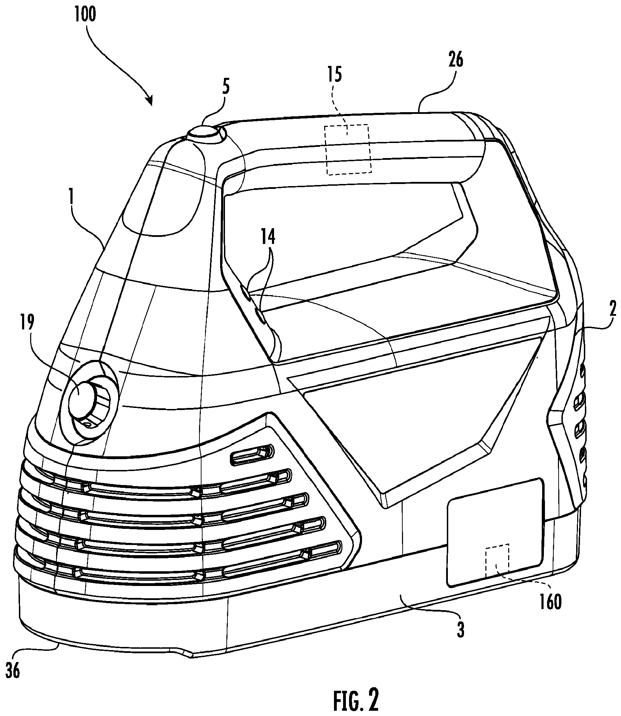

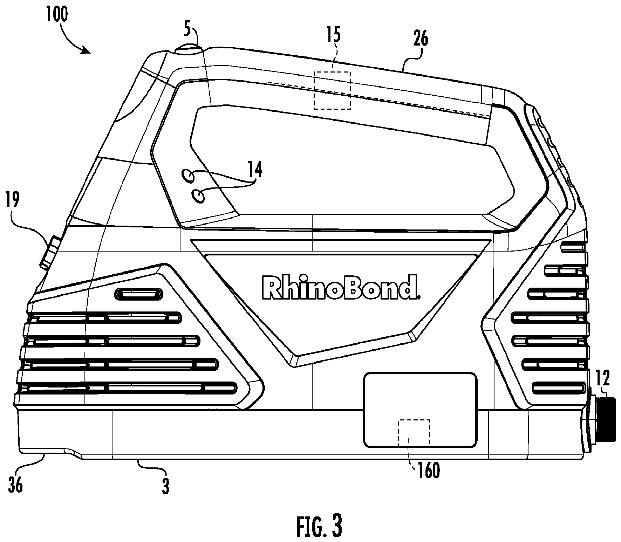

As illustrated in Figures 1-8, the hand-held induction bonding tool 100, is a compact, self-contained tool for inductively heating bonding plates positioned beneath a roofing membrane. The tool 100 is constructed from mating left and right housing parts 1, 2 molded of ABS plastic. The base 3 is molded from plastic that is capable of resisting high temperatures, such as ULTEM 1010, from Stratasys, of Rehovot, Isreal. The housing 1, 2, is configured to project upwardly from and rest upright on the base 3, with a handle 26 arranged to be grasped by the user to move and operate the tool 100. An actuation switch 5 is situated on the top of the handle, toward the front end of the tool 100. A heat adjustment knob 19 is located on the front end of the tool 100, allowing the user to adjust a potentiometer 16 to increase or decrease the quantity of energy delivered to a bonding plate 40. The handle contains a vibration motor 15 that generates a vibratory feedback to the user during an induction heating cycle. LED lights 14 are positioned on both sides of the tool 100, so they are visible whether the tool 100 is operated with the left or right hand. Each LED 14 includes a lens 17 secured to the housing 1, 2 by a lock ring. The lens 17 projects the light over a wide range of angles, making the LEDs visible from a range of vantage points around the tool 100.

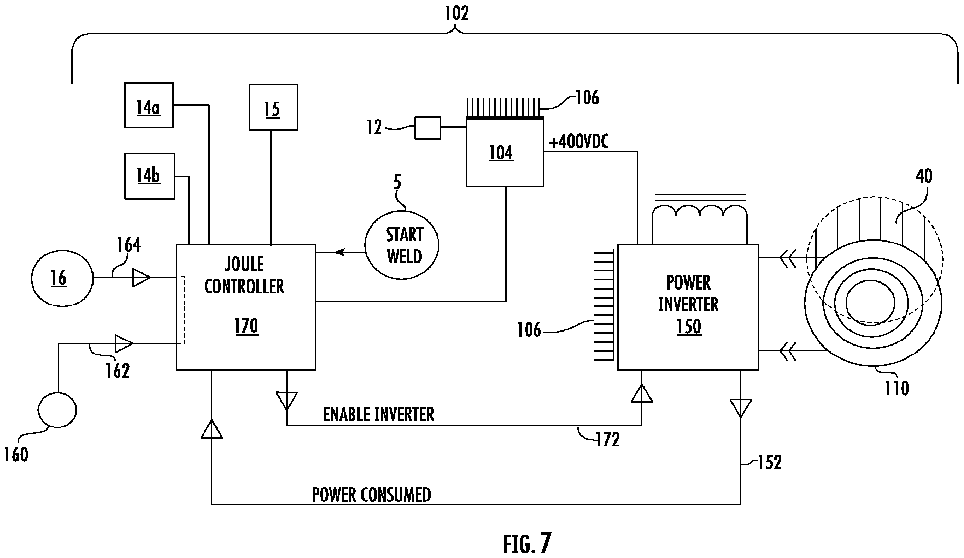

The tool 100 includes electronic circuitry 102 that performs several functions, as shown in Figure 7. The electronic circuitry 102 includes a power supply 104 that receives input power through a coupling 12 and generates power of different voltage and current for use by other parts of the tool 100. Low voltage DC is distributed as needed for integrated circuits including operational amplifiers, oscillators and other logic components. Low voltage DC power is also used to illuminate the LED lights 14a (green) and 14b (red) and power the vibration motor 15. LED light 14a is lit when the tool 100 has power and is ready to initiate an induction heating cycle. LED light 14b and vibration motor 15 are operational for the duration of an induction heating cycle. An "induction heating cycle" refers to a period of time after the operator actuates the switch 305, during which an oscillating electric energy is applied to the working coil 410 of the induction heating tool 300. During the induction heating cycle, the working coil 410 projects an oscillating magnetic field that creates eddy currents in the bonding plate 40, heating the plate.

The power supply 104 also generates high voltage (400VDC) at roughly 2A current for use by a power inverter circuit 150. The power supply 104 and power inverter circuit 150 include components such as inductors, capacitors, and power transistors that generate significant amounts of heat. Heat generating components of the power supply 104 and power inverter circuit 150 may be thermally coupled to a heat sink 106 that includes fins to enhance the heat emitting surface area of the heat sink as is known in the art. A cooling fan 11 is mounted at a rear end of the tool 100 in a position to pull air through openings in the housing 1, 2, across the electronic circuitry 102 on PC board 13 and heat sink 106 to remove heat and prevent overheating of the electronic circuitry 102.

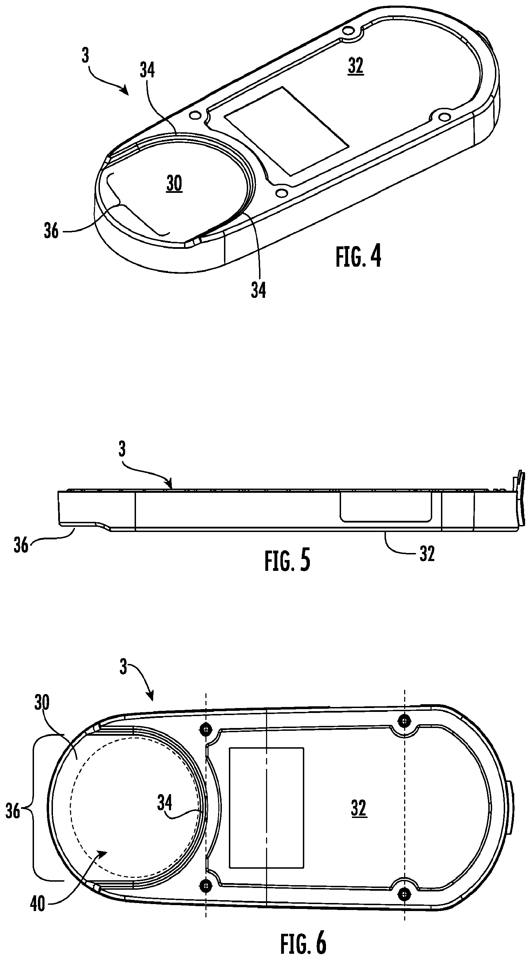

A work coil 110 is positioned in the base 3, at the front end of the tool 100, as shown in Figure 1. When energized by the power inverter circuit 150, the work coil 110 generates an oscillating magnetic field to inductively heat a bonding plate. The work coil 110 is mounted to the heat resistant base 3 in a position aligned with a recess 30 defined on the bottom (support) surface 32 of the base 3. The recess 30 is delineated by a curved wall 34 projecting from the bottom surface 32 of the base 3. The wall 34 may be continuous as shown in Figure 6, or may be interrupted as shown in Figure 4. Although a curved wall 34 defining a semicircular recess 30 is shown, other wall and recess shapes are compatible with the disclosed tool 100. Straight, angled walls or wall segments may be used to define a recess 30 aligned with the work coil 110.

The terms "align" and "aligned" are used in this application to refer to the relative position of the work coil 410 with respect to the recess 330 in the base 303 and also to the relative position of the work coil 410 with respect to a bonding plate 220, 340 when the tool 300 is in use. The position of the work coil 410 in the tool 300 is concentric with the recess 330 defined by wall 334. This increases the likelihood that the work coil 410 is also concentrically aligned over a bonding plate 220, 340 when in use, as described below. The flat roof substrate and base 303 of the tool 300 position the work coil 410 close to and parallel with the bonding plate 220, 340 when the tool 300 is in use. The work coil 410 is "aligned" with the bonding plate 220, 340, when the work coil is concentric with the bonding plate 220, 340. The work coil is "substantially aligned" with the bonding plate when there is substantial overlap between the work coil 410 and the bonding plate 220, 340, but the two are not concentric. Alignment between the work coil 410 and a bonding plate 220, 340 ensures even and efficient heating of the bonding plate 220, 340, which results in high integrity bonds between the roofing membrane and the bonding plate 220, 340. Alignment also prevents excess heating of metallic materials surrounding the bonding plate 220, 340, such as a foil facing on rigid foam insulation beneath the bonding plate 220, 340.

A bonding plate 40 (schematically shown in Figures 6 and 7) has a raised top surface coated with heat activated adhesive. The bonding plate 40 produces a raised "bump" in roofing membrane that can be used to help locate the work coil 110 over the bonding plate 40. The wall 34 or wall segments defining the recess 30 do not extend across the front end of the base 3, leaving an opening 36 at the front of the base 3. This opening 36 allows the operator to place the tool 100 generally over the raised portion of membrane over a bonding plate 40, and advance the tool 100 forward until the raised portion contacts the wall 34 at the rear of the recess 30, which provides tactile feedback to the operator that the bonding plate 40 is now in position beneath the work coil 110, as shown in Figure 6.

The tool 100 incorporates a temperature sensor 160 positioned in the base 3, near bottom surface of the base 3. The temperature sensor 160 is positioned to sense the temperature of the roof surface and provide a temperature signal 162 to the joule controller circuit 170, as shown in Figure 7. The temperature sensor 160 is spaced apart from the work coil 110, which gets hot during use of the tool 100. The temperature signal 162 is employed by the joule controller circuit 170 to adjust energy delivered to a plate 40 magnetically coupled to the work coil 110 during an induction heating cycle. A higher temperature at the roof membrane (and plate 40) generally means less energy is needed to bring the temperature of the plate 40 to a temperature that will activate (melt) the heat activated adhesive.

The tool also incorporates a potentiometer 16 connected to a knob 19 mounted to the forward end of the housing 1, 2. The potentiometer 16 allows the user to adjust the energy delivered to a plate as conditions on the job site may require. For example, a cold wet day may require additional energy delivered to each plate to melt the adhesive and form a good bond with the roof membrane. The operator can perform one or more test welds under field conditions and examine the resulting bonds. The potentiometer 16 produces an energy adjustment signal 164 that is provided to the joule controller circuit 170, as shown in Figure 7. The potentiometer 16 has a center point indicated by corresponding marks on the knob 19 and housing 1, 2. The potentiometer center point represents a neutral position where the adjustment does not increase or decrease energy delivered to the plate 40. Rotation of the knob 19 and potentiometer 16 in a first direction (clockwise) increases energy delivered to the plate 40 by approximately 15% to 20%, while rotation of the knob 19 and potentiometer 16 in a second direction reduce energy delivered to the plate 40 by approximately 15% to 20%. This easy to understand adjustment allows operators to "tune" performance of the tool 100 to field conditions and make adjustments over the course of a day as conditions change. The temperature signal 162 and energy adjustment signal 164 may be used independently by the joule control circuit 170 to alter the pattern and/or duration of energy delivery to a bonding plate 40. Alternatively, the temperature signal 162 and energy adjustment signal 164 may be combined and the combined value employed to alter the pattern and/or duration of energy delivery to a bonding plate 40.

The power inverter circuit 150 is configured to generate a power consumed signal 152, the magnitude of which corresponds to power consumed by the work coil 110 during an induction heating cycle. The power consumed signal 152 is delivered to the joule controller circuit 170 and is used to define the quantity of energy generated by the power inverter circuit 150 during each induction heating cycle. The joule controller circuit 170 generates an enable inverter signal 172 that initiates each induction heating cycle by the power inverter circuit 150 and the enable inverter signal 172 must be present for the power inverter circuit 150 to operate. The power consumed signal 152 must have a positive value indicating that a plate 40 is at least partially magnetically coupled to the work coil 110. If the power consumed signal 152 is below a threshold value, the induction heating cycle is terminated.

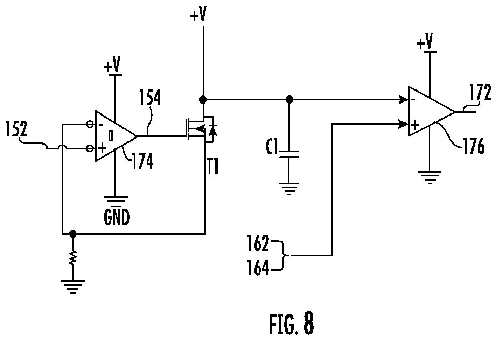

The power inverter circuit 150 and joule controller circuit 170 are initially configured to deliver a pre-determined quantity of energy to a bonding plate at a pre-determined distance from the work coil over a pre-determined time. In one embodiment, the quantity of energy is approximately 4000 joules, the distance is approximately .180 inches and the time is about 5 seconds. From this starting point, the temperature signal 162 and the energy adjustment signal 164 are used by the joule controller circuit 170 to increase or decrease the quantity of energy delivered to a bonding plate 40 coupled to the magnetic field generated by the work coil 110. In one embodiment of a joule controller circuit 170 partially illustrated in Figure 8, the power consumed signal 152 is used to generate a variable input 154 to a transistor T1 that controls discharge of a capacitor C1. The power consumed signal 152 may be a voltage and operational amplifier 174 may be configured as a voltage to current converter. The variable current 154 is used to control current flow through transistor T1, which determines the rate at which capacitor C1 discharges to ground. The voltage across the capacitor C1 decreases as it discharges. The voltage across capacitor C1 is one input to a comparator 176. The other input to the comparator 176 is a value derived from the temperature signal 162 and energy adjustment signal 164. When the voltage across capacitor C1 falls below the value at the other input of comparator 176, then the enable inverter signal 172 is cut off, turning off the power inverter circuit 150, ending an induction heating cycle.

According to aspects of the disclosure, the energy consumed signal 152 is only present when a plate 40 is inductively coupled to the work coil 110. The energy consumed signal 152 is evaluated to determine if the value indicates a plate is coupled to the work coil 110. Evaluation of the energy consumed signal 152 may be conducted by sending the energy consumed signal 152 to a comparator for comparison to a pre-determined standard. If the energy consumed signal 152 is greater than the pre-determined standard, then activation of the power inverter circuit 150 is enabled. If the energy consumed signal 152 is less than the pre-determined standard, then activation of the power inverter circuit 150 is disabled and the heating cycle is terminated. The energy consumed signal 152 is used for two purposes: as one of a plurality of inputs to the joule controller 170 that are used to determine the length of time that the power inverter circuit 150 applies energy to the work coil 110; and as a no load inhibitor when a plate is not present or is grossly misaligned relative to the work coil 110. This prevents activation of a heating cycle in circumstances that may overheat a foil facing on the rigid foam insulation beneath the roof membrane.

## Claims

1. A portable induction heating tool (100) comprising:
a housing including a base (3) having a support surface (32), said support surface defining a recess (30) facing away from said housing, said recess at least partially defined by a wall (34) projecting from said support surface (32);
a work coil (110) within said housing and secured to said base (3) in a location aligned with said recess (30);
electronic circuitry (102) configured to provide oscillating electrical energy to said work coil (110), thereby generating an oscillating magnetic field projecting away from said base (3),
**characterised in that** said electronic circuitry is also configured to detect the quantity of energy consumed by said work coil (110) and to limit said quantity of energy to a predetermined quantity,
wherein said base (3) has a front end and a rear end, said wall (34) defines a rear limit of said recess (30), said rear limit of said recess (30) located between said front end and said rear end, said recess (30) being open toward the front end of said base (3).

2. The portable induction heating tool (100) of claim 1, wherein said recess (30) is located at the front end of the base.

3. The portable induction heating tool (100) of claim 1, wherein said housing includes a body extending from said base and said body includes a handle (26), said tool (100) comprising a vibrator (15) arranged to generate vibrations detectable by a user grasping said handle (26), said electronic circuitry configured to actuate said vibrator (15) while said oscillating magnetic field is generated.

4. The portable induction heating tool (100) of claim 1, wherein said tool (100) comprises a temperature sensor (160) arranged to detect a temperature adjacent said support surface (32) and provide a temperature signal to said electronic circuitry (102); and/or
an energy delivery adjustment (16) connected to said electronic circuitry (102), said energy delivery adjustment (16) located on an exterior of said housing, said energy delivery adjustment (16) generating an adjustment signal (164) to said electronic circuitry (102),
wherein said electronic circuitry (102) is configured to employ one or both of said temperature signal (162) and said energy delivery adjustment signal (164) to adjust said predetermined quantity.

5. The portable induction heating tool (100) of claim 1, wherein said electronic circuitry (102) detects said quantity of energy consumed and produces a power consumed signal (152) having a value, the value of said power consumed signal (152) being greatest when a plate (40) is aligned with and magnetically coupled to said work coil (110), and said electronic circuitry (102) configured to terminate the application of oscillating electrical energy to said work coil (110) if said power consumed signal (152) is less than a pre-determined value.

6. The portable induction heating tool (100) of claim 1, wherein said tool (100) provides visual and haptic feedback to the user while oscillating electrical energy is applied to said work coil (110).

7. A method for induction heating of a bonding plate (40) comprising:
providing a portable induction heating tool (100), the portable induction heating tool (100)comprising:
a housing including a base (3) having a support surface (32), said support surface (32) defining a recess (30) facing away from said housing, said recess (30) at least partially defined by a wall (34) projecting from said support surface (32);
a work coil (110) within said housing and secured to said base (3) in a location aligned with said recess (30);
electronic circuitry (102) configured to provide oscillating electrical energy to said work coil (110), thereby generating an oscillating magnetic field projecting away from said base (3), said electronic circuitry (102) also configured to detect a quantity of energy consumed by said work coil (110) and to limit said quantity of energy to a predetermined quantity;
positioning said portable induction heating tool (100) proximate to the bonding plate (40), wherein said recess (30) of said portable induction heating tool (100) is configured to provide tactile feedback of the position of said bonding plate (40) relative to said work coil (110); and
energizing said work coil (110) to magnetically couple said work coil (110) to said bonding plate (40) and generate eddy currents in the plate (40) to inductively heat the plate (40),
wherein said base (3) has a front end and a rear end, said wall (34) defines a rear limit of said recess (30), said rear limit of said recess (30) located between said front end and said rear end, said recess (30) being open toward the front end of said base (3).

8. The method of claim 7, further comprising the steps of detecting energy consumed by said work coil (110) while energized and de-energizing said work coil (110) when a predetermined quantity of energy has been consumed by said work coil.

9. The method of claim 8, comprising: detecting the ambient temperature by including a temperature sensor (160) in said base (3), said temperature sensor (160) being spaced apart from said work coil (110) and generating a temperature signal (162) that is used to define said pre-determined quantity of energy.

10. The method of claim 7, comprising:
providing a detector that generates a power consumed signal (152) having a value that is greatest when a plate (40) is aligned with said work coil (110),
comparing the value of said power consumed signal (152) to a predetermined standard at the beginning of each step of energizing, and
terminating said step of energizing if said power consumed signal (152) is less than said pre-determined standard.

11. The method of claim 7, comprising:
providing a manual energy adjustment, said energy adjustment generating an energy adjustment signal (164),
employing said energy adjustment signal (164) to define said predetermined quantity of energy; and
de-energizing said work coil (110) when said pre-determined quantity of energy has been consumed at said work coil (110).

12. The method of claim 8, comprising:
providing a manual energy adjustment, said energy adjustment generating an energy adjustment signal (164),
employing said energy adjustment signal (164) and said temperature signal to define said pre-determined quantity of energy; and
de-energizing said work coil (110) when said pre-determined quantity of energy has been consumed at said work coil (110).

## Patentansprüche

1. Portables Induktionsheizwerkzeug (100), umfassend:
ein Gehäuse einschließlich einer Basis (3) mit einer Stützfläche (32), wobei die Stützfläche eine Aussparung (30) definiert, die von dem Gehäuse weg zeigt, wobei die Aussparung zumindest teilweise durch eine Wand (34) definiert wird, die von der Stützfläche (32) herausragt;
eine Arbeitsspule (110) in dem Gehäuse, die an der Basis (3) an einem Ort befestigt ist, der mit der Aussparung (30) ausgerichtet ist;
eine elektronische Schaltungsanordnung (102), die dazu ausgelegt ist, oszillierende elektrische Energie an die Arbeitsspule (110) bereitzustellen, wodurch ein oszillierendes Magnetfeld erzeugt wird, das von der Basis (3) weg projiziert wird,
**dadurch gekennzeichnet, dass** die elektronische Schaltungsanordnung außerdem dazu ausgelegt ist, die durch die Arbeitsspule (110) verbrauchte Energiemenge zu detektieren und die Energiemenge auf eine vorbestimmte Menge zu beschränken,
wobei die Basis (3) ein vorderes Ende und ein hinteres Ende aufweist, wobei die Wand (34) eine hintere Grenze der Aussparung (30) definiert, wobei sich die hintere Grenze der Aussparung (30) zwischen dem vorderen Ende und dem hinteren Ende befindet, wobei die Aussparung (30) zu dem vorderen Ende der Basis (3) hin offen ist.

2. Portables Induktionsheizwerkzeug (100) nach Anspruch 1, wobei sich die Aussparung (30) an dem vorderen Ende der Basis befindet.

3. Portables Induktionsheizwerkzeug (100) nach Anspruch 1, wobei das Gehäuse einen Körper beinhaltet, der sich von der Basis erstreckt, und der Körper einen Griff (26) beinhaltet, wobei das Werkzeug (100) einen Vibrator (15) umfasst, der dazu eingerichtet ist, Vibrationen zu erzeugen, die durch einen Benutzer detektierbar sind, der den Griff (26) ergreift, wobei die elektronische Schaltungsanordnung dazu ausgelegt ist, den Vibrator (15) anzusteuern, während das oszillierende Magnetfeld erzeugt wird.

4. Portables Induktionsheizwerkzeug (100) nach Anspruch 1, wobei das Werkzeug (100) einen Temperatursensor (160) umfasst, der dazu eingerichtet ist, eine Temperatur neben der Stützfläche (32) zu detektieren und ein Temperatursignal an die elektronische Schaltungsanordnung (102) bereitzustellen; und/oder
eine Energielieferungsanpassung (16), die mit der elektronischen Schaltungsanordnung (102) verbunden ist, wobei sich die Energielieferungsanpassung (16) an einer Außenseite des Gehäuses befindet, wobei die Energielieferungsanpassung (16) ein Anpassungssignal (164) für die elektronische Schaltungsanordnung (102) erzeugt,
wobei die elektronische Schaltungsanordnung (102) dazu ausgelegt ist, das Temperatursignal (162) und/oder das Energielieferungsanpassungssignal (164) einzusetzen, um die vorbestimmte Menge anzupassen.

5. Portables Induktionsheizwerkzeug (100) nach Anspruch 1, wobei die elektronische Schaltungsanordnung (102) die verbrauchte Energiemenge detektiert und ein Leistungsverbrauchssignal (152) mit einem Wert erzeugt, wobei der Wert des Leistungsverbrauchssignals (152) am größten ist, wen eine Platte (40) mit der Arbeitsspule (110) ausgerichtet und magnetisch gekoppelt ist, und wobei die elektronische Schaltungsanordnung (102) dazu ausgelegt ist, die Anlegung von oszillierender elektrischer Energie an die Arbeitsspule (110) zu beenden, falls das Leistungsverbrauchssignal (152) kleiner als ein vorbestimmter Wert ist.

6. Portables Induktionsheizwerkzeug (100) nach Anspruch 1, wobei das Werkzeug (100) eine visuelle und haptische Rückmeldung an den Benutzer liefert, während oszillierende elektrische Energie an die Arbeitsspule (110) angelegt wird.

7. Verfahren zur Induktionserwärmung einer Bonding-Platte (40), umfassend:
Bereitstellen eines portablen Induktionsheizwerkzeugs (100), wobei das portable Induktionsheizwerkzeug (100) umfasst:
ein Gehäuse einschließlich einer Basis (3) mit einer Stützfläche (32), wobei die Stützfläche (32) eine Aussparung (30) definiert, die von dem Gehäuse weg zeigt, wobei die Aussparung (30) zumindest teilweise durch eine Wand (34) definiert wird, die von der Stützfläche (32) herausragt;
eine Arbeitsspule (110) in dem Gehäuse, die an der Basis (3) an einem Ort befestigt ist, der mit der Aussparung (30) ausgerichtet ist;
eine elektronische Schaltungsanordnung (102), die dazu ausgelegt ist, oszillierende elektrische Energie an die Arbeitsspule (110) bereitzustellen, wodurch ein oszillierendes Magnetfeld erzeugt wird, das von der Basis (3) weg projiziert wird, wobei die elektronische Schaltungsanordnung (102) außerdem dazu ausgelegt ist, eine durch die Arbeitsspule (110) verbrauchte Energiemenge zu detektieren und die Energiemenge auf eine vorbestimmte Menge zu beschränken;
Positionieren des portablen Induktionsheizwerkzeugs (100) in der Nähe der Bonding-Platte (40), wobei die Aussparung (30) des portablen Induktionsheizwerkzeugs (100) dazu ausgelegt ist, eine taktile Rückmeldung der Position der Bonding-Platte (40) relativ zu der Arbeitsspule (110) bereitzustellen; und
Versorgen der Arbeitsspule (110) mit Energie, um die Arbeitsspule (110) magnetisch mit der Bonding-Platte (40) zu koppeln und Wirbelströme in der Platte (40) zu erzeugen, um die Platte (40) induktiv zu erwärmen,
wobei die Basis (3) ein vorderes Ende und ein hinteres Ende aufweist, wobei die Wand (34) eine hintere Grenze der Aussparung (30) definiert, wobei sich die hintere Grenze der Aussparung (30) zwischen dem vorderen Ende und dem hinteren Ende befindet, wobei die Aussparung (30) zu dem vorderen Ende der Basis (3) hin offen ist.

8. Verfahren nach Anspruch 7, ferner umfassend die Schritte des Detektierens einer durch die Arbeitsspule (110) verbrauchten Energie, während sie mit Energie versorgt wird, und Trennens der Energieversorgung der Arbeitsspule (110), wenn eine vorbestimmte Energiemenge durch die Arbeitsspule verbraucht wurde.

9. Verfahren nach Anspruch 8, umfassend:
Detektieren der Umgebungstemperatur durch Einschließen eines Temperatursensors (160) in der Basis (3), wobei der Temperatursensor (160) von der Arbeitsspule (110) beabstandet ist, und Erzeugen eines Temperatursignals (162), das zum Definieren der vorbestimmten Energiemenge verwendet wird.

10. Verfahren nach Anspruch 7, umfassend:
Bereitstellen eines Detektors, der ein Leistungsverbrauchssignal (152) mit einem Wert erzeugt, der am größten ist, wenn eine Platte (40) mit der Arbeitsspule (110) ausgerichtet ist,
Vergleichen des Werts des Leistungsverbrauchssignals (152) mit einem vorbestimmten Standard zu Beginn jedes Schritts der Energieversorgung, und
Beenden des Schritts der Energieversorgung, falls das Leistungsverbrauchssignal (152) kleiner als der vorbestimmte Standard ist.

11. Verfahren nach Anspruch 7, umfassend:
Bereitstellen einer manuellen Energieanpassung, wobei die Energieanpassung ein Energieanpassungssignal (164) erzeugt,
Einsetzen des Energieanpassungssignals (164), um die vorbestimmte Energiemenge zu definieren; und
Trennen der Energieversorgung der Arbeitsspule (110), wenn die vorbestimmte Energiemenge an der Arbeitsspule (110) verbraucht wurde.

12. Verfahren nach Anspruch 8, umfassend:
Bereitstellen einer manuellen Energieanpassung, wobei die Energieanpassung ein Energieanpassungssignal (164) erzeugt,
Einsetzen des Energieanpassungssignals (164) und des Temperatursignals, um die vorbestimmte Energiemenge zu definieren; und
Trennen der Energieversorgung der Arbeitsspule (110), wenn die vorbestimmte Energiemenge an der Arbeitsspule (110) verbraucht wurde.

## Revendications

1. Outil (100) de chauffe par induction portable comprenant :
un boîtier comportant une base (3) ayant une surface de support (32), ladite surface de support définissant un renfoncement (30) tourné à l'opposé dudit boîtier, ledit renfoncement étant au moins partiellement défini par une paroi (34) faisant saillie de ladite surface de support (32) ;
une bobine de travail (110) à l'intérieur dudit boîtier et fixée à ladite base (3) à un emplacement aligné avec ledit renfoncement (30) ;
des circuits électroniques (102) configurés pour fournir de l'énergie électrique oscillante à ladite bobine de travail (110), générant ainsi un champ magnétique oscillant s'étendant à l'opposé de ladite base (3),
**caractérisé en ce que** lesdits circuits électroniques sont également configurés pour détecter la quantité d'énergie consommée par ladite bobine de travail (110) et pour limiter ladite quantité d'énergie à une quantité prédéterminée,
ladite base (3) ayant une extrémité avant et une extrémité arrière, ladite paroi (34) définissant une limite arrière dudit renfoncement (30), ladite limite arrière dudit renfoncement (30) étant située entre ladite extrémité avant et ladite extrémité arrière, ledit renfoncement (30) étant ouvert en direction de l'extrémité avant de ladite base (3).

2. Outil (100) de chauffe par induction portable selon la revendication 1, ledit renfoncement (30) étant situé au niveau de l'extrémité avant de la base.

3. Outil (100) de chauffe par induction portable selon la revendication 1, ledit boîtier comportant un corps s'étendant depuis ladite base et ledit corps comportant une poignée (26), ledit outil (100) comprenant un vibreur (15) agencé pour générer des vibrations pouvant être détectées par un utilisateur saisissant ladite poignée (26), lesdits circuits électroniques étant configurés pour actionner ledit vibreur (15) tandis que ledit champ magnétique oscillant est généré.

4. Outil (100) de chauffe par induction portable selon la revendication 1, ledit outil (100) comprenant un capteur de température (160) agencé pour détecter une température adjacente à ladite surface de support (32) et fournir un signal de température auxdits circuits électroniques (102) ; et/ou
un ajustement de fourniture d'énergie (16) connecté auxdits circuits électroniques (102), ledit ajustement de fourniture d'énergie (16) étant situé sur un extérieur dudit boîtier, ledit ajustement de fourniture d'énergie (16) générant un signal d'ajustement (164) auxdits circuits électroniques (102),
lesdits circuits électroniques (102) étant configurés pour employer un ou les deux dudit signal de température (162) et dudit signal d'ajustement de fourniture d'énergie (164) pour ajuster ladite quantité prédéterminée.

5. Outil (100) de chauffe par induction portable selon la revendication 1, lesdits circuits électroniques (102) détectant ladite quantité d'énergie consommée et produisant un signal de puissance consommée (152) ayant une valeur, la valeur dudit signal de puissance consommée (152) étant supérieure lorsqu'une plaque (40) est alignée avec et couplée magnétiquement à ladite bobine de travail (110), et lesdits circuits électroniques (102) étant configurés pour terminer l'application d'énergie électrique oscillante à ladite bobine de travail (110) si ledit signal de puissance consommée (152) est inférieur à une valeur prédéterminée.

6. Outil (100) de chauffe par induction portable selon la revendication 1, ledit outil (100) fournissant une réponse visuelle et haptique à l'utilisateur pendant que de l'énergie électrique oscillante est appliquée à ladite bobine de travail (110).

7. Procédé de chauffe par induction d'une plaque de soudure (40) comprenant :
la fourniture d'un outil (100) de chauffe par induction portable, l'outil (100) de chauffe par induction portable comprenant :
un boîtier comportant une base (3) ayant une surface de support (32), ladite surface de support (32) définissant un renfoncement (30) tourné à l'opposé dudit boîtier, ledit renfoncement (30) étant au moins partiellement défini par une paroi (34) faisant saillie de ladite surface de support (32) ;
une bobine de travail (110) à l'intérieur dudit boîtier et fixée à ladite base (3) à un emplacement aligné avec ledit renfoncement (30) ;
des circuits électroniques (102) configurés pour fournir de l'énergie électrique oscillante à ladite bobine de travail (110), générant ainsi un champ magnétique oscillant s'étendant à l'opposé de ladite base (3), lesdits circuits électroniques (102) étant également configurés pour détecter une quantité d'énergie consommée par ladite bobine de travail (110) et pour limiter ladite quantité d'énergie à une quantité prédéterminée,
le positionnement dudit outil (100) de chauffe par induction portable à proximité de la plaque de soudure (40), ledit renfoncement (30) dudit outil (100) de chauffe par induction portable étant configuré pour fournir une réponse tactile de la position de ladite plaque de soudure (40) par rapport à ladite bobine de travail (110) ; et
l'excitation de ladite bobine de travail (110) pour coupler magnétiquement ladite bobine de travail (110) à ladite plaque de soudure (40) et générer des courants de Foucault dans la plaque (40) afin de chauffer de façon inductive la plaque (40),
ladite base (3) ayant une extrémité avant et une extrémité arrière, ladite paroi (34) définissant une limite arrière dudit enfoncement (30), ladite limite arrière dudit renfoncement (30) étant située entre ladite extrémité avant et ladite extrémité arrière, ledit renfoncement (30) étant ouvert vers l'extrémité avant de ladite base (3).

8. Procédé selon la revendication 7, comprenant en outre les étapes de détection d'énergie consommée par ladite bobine de travail (110) pendant l'excitation et la désexcitation de ladite bobine de travail (110) lorsqu'une quantité d'énergie prédéterminée a été consommée par ladite bobine de travail.

9. Procédé selon la revendication 8, comprenant :
la détection de la température ambiante en incluant un capteur de température (160) dans ladite base (3), ledit capteur de température (160) étant espacé de ladite bobine de travail (110) et générant un signal de température (162) qui est utilisé pour définir ladite quantité d'énergie prédéterminée.

10. Procédé selon la revendication 7, comprenant :
la fourniture d'un détecteur qui génère un signal de puissance consommée (152) ayant une valeur supérieure lorsqu'une plaque (40) est alignée avec ladite bobine de travail (110),
la comparaison de la valeur dudit signal de puissance consommée (152) à une norme prédéterminée au début de chaque étape d'excitation, et
le fait de terminer ladite étape d'excitation si ledit signal de puissance consommée (152) est inférieur à ladite norme prédéterminée.

11. Procédé selon la revendication 7, comprenant :
la fourniture d'un ajustement d'énergie manuel, ledit ajustement d'énergie générant un signal d'ajustement d'énergie (164),
l'emploi dudit signal d'ajustement d'énergie (164) pour définir ladite quantité d'énergie prédéterminée ; et
la désexcitation de ladite bobine de travail (110) lorsque ladite quantité d'énergie prédéterminée a été consommée par ladite bobine de travail (110).

12. Procédé selon la revendication 8, comprenant :
la fourniture d'un ajustement d'énergie manuel, ledit ajustement d'énergie générant un signal d'ajustement d'énergie (164),
l'emploi dudit signal d'ajustement d'énergie (164) et dudit signal de température pour définir ladite quantité d'énergie prédéterminée ; et
la désexcitation de ladite bobine de travail (110) lorsque ladite quantité d'énergie prédéterminée a été consommée par ladite bobine de travail (110).
